# EUROPEAN PATENT APPLICATION

(11) **EP 3 766 751 A1**
(43) Date of publication of application: **20.01.2021**
(21) Application number: 19186829.8
(22) Date of filing: 17.07.2019
(51) Int. Cl.: B60T 11/26, B65D 1/46

(54) **REINFORCED MOLDED PLASTIC TANK**

(71) Applicant: Illinois Tool Works Inc., Glenview, IL 60025 (US)
(72) Inventor: IAFRATE, Serge, Glenview, IL Illinois 60025 (US)
(74) Representative: HGF

(57) **Abstract**

A tank (110), in particular for a vehicle, comprising a single-piece body (112) made of a molded plastic material, said body comprising a bladder (114) defining an internal fluid cavity (116) and a protruding neck (118) defining a fluid port (120) in fluidic communication with said cavity, characterized in that it further includes at least one reinforcing plastic patch (124) integrated into the molded material, said patch being located in an area of the bladder where such local reinforcement is needed.

## Description

### TECHNICAL FIELD

The present invention concerns a tank, in particular for a vehicle such as an automotive vehicle, this tank being made of plastic and being manufactured by injection molding.

### BACKGROUD OF THE INVENTION

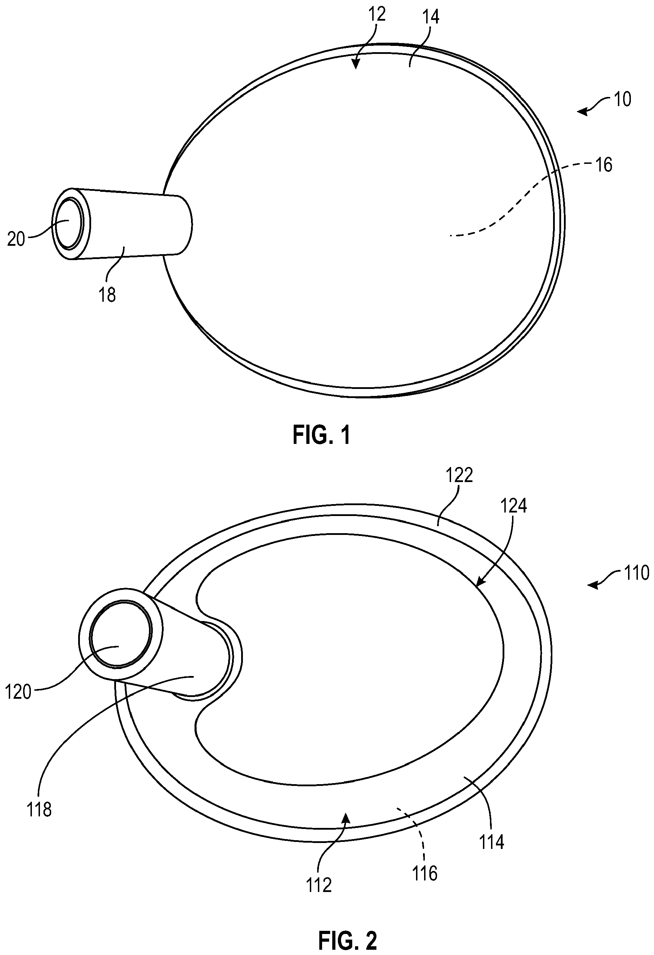

Tanks of vehicle can be made by injection molding. This is the case for instance of a degassing tank or a brake tank. Such a tank 10 is shown in figure 1 and includes a single-piece body 12 made of a molded plastic material. This body 12 comprises a bladder 14 defining an internal fluid cavity 16 and a protruding neck 18 defining a fluid port 20 in fluidic communication with the cavity 16.

Such a tank is subjected to high internal pressure and high temperature in operation. For instance, a degassing tank must resist to internal pressure of about 140kPa and temperature up to 135°C. The plastic material of the tank should therefore be selected to withstand such conditions. However, the material of the tank should also be sufficiently flexible so as to allow resultant deformations of the tank in operation in order to avoid any interference with surrounding parts.

Therefore, the stresses induced in the tank and the requested deformations of the tank in operation should be taken into account to choose a suitable plastic raw material to manufacture the tank.

A tank is typically shaped and dimensioned according to the stress limit of its raw material. In case of a tank as specified above, the main stressed area and the biggest deformations are often located at the top and / or the bottom of the tank.

According to the state of the art, solutions to this technical problem consist in providing stiffening ribs on or in the bladder, adjusting curvature radii of the bladder and of the linking area between the neck and the bladder, increasing the thickness of the bladder, introducing fillers into the raw material, such as glass fibers, etc.

However, these solutions have got some weakpoints such as:
- the internal volume of the tank would be decreased, often below the required internal volume by the customers,
- the amount and the weight of the raw material to be used for manufacturing a tank would be increased,
- the injection cycle time during the molding process would be increased,
- this welding process should be adapted which should lead to a more expansive process,
- the cost of the raw material and of the tank would be increased,
- etc.

There is therefore a need to find a solution to at least some of these problems, which would be simple, efficient and cheaper than the current solutions.

### SUMMARY OF THE INVENTION

The present invention concerns a tank, in particular for a vehicle, comprising a single-piece body made of a molded plastic material, said body comprising a bladder defining an internal fluid cavity and a protruding neck defining a fluid port in fluidic communication with said cavity, characterized in that it further includes at least one reinforcing plastic patch integrated into the molded material.

The purpose of this invention is to optimize the mechanical resistance / deformation of the tank without changing its shape, internal volume, and weight. This aim is achieved by the reinforced patch which is integrated into the material of the tank. Both the raw materials of the tank and the patch are plastic materials.

Said patch is preferably located in an area of the bladder where such local reinforcement is needed. In a preferred embodiment, said patch extends at least in part about said neck.

The tank according to the invention may comprise one or more of the following features, taken alone from each other or in combination with each other:
- said patch is made of a fabric,
- said patch is made of a woven fabric,
- said patch has a mesh opening which is lower than or equal to 1000µm, preferably lower than or equal to 800µm, and more preferably lower than or equal to 500µm,
- said patch includes carbon fibers,
- said patch includes plastic fibers made of at least one polymer selected from the group consisting of polyester, polyamide, polypropylene, polyethylene terephthalate, aramid,
- said fibers have a diameter lower than or equal to 500µm, and preferably lower than or equal to 250µm,
- said plastic material is selected among polypropylene and polyethylene, and a combination thereof,
- said plastic material is devoid of any filler outside said area,
- said bladder area has a thickness which is between 1.5 mm and 4 mm,
- said body is made of an upper molded shell and a lower molded shell which are welded together and linked to one another by a welding bead, one of said upper and lower shells, or both, including said patch,
- said patch is colored and/or printed.

### BRIEF DESCRIPTION OF THE FIGURES

The invention will be better understood and other details, features and advantages of the invention will appear more clearly on reading the following description given by way of non-limiting examples and with reference to the accompanying drawings in which:
- Figure 1 is a schematic perspective view of a tank according to the prior art,
- Figure 2 is a schematic perspective view of a tank according to an embodiment of the invention,
- Figure 3 is a schematic view of an example of reinforcing patch,
- Figure 4 is a schematic view of a reinforcing patch, in a greater view scale.

### MORE DETAILED DESCRIPTION

Figure 1 illustrates the prior art and has already been described.

Figure 2 illustrates a tank 100 according to an embodiment of the invention.

The tank 100 is a vehicle tank and in particular a degassing tanks in the example shown.

The tank 100 includes a single-piece body 112 made of a molded plastic material. This body 112 comprises a bladder 114 defining an internal fluid cavity 116 and a protruding neck 118 defining a fluid port 120 in fluidic communication with the cavity 116.

The body 112 of the tank 120 may be made of an upper molded shell and a lower molded shell which are welded together and linked to one another by a welding bead 122. In the example shown, the lower shell is not visible and the upper shell includes the neck 118.

The tank 100 further includes a reinforcing plastic patch 124 integrated into the molded material.

The plastic material of the tank is selected among polypropylene and polyethylene, and a combination thereof. Said plastic material is devoid of any filler outside the area occupied by the patch 124.

The patch 124 is configured to reinforce the tank in particular in the area where high stresses occurred in operation. One such area is the area surrounding the neck 118. The patch 124 extends therefore at least in part about said neck 118.

The patch 124 is made of plastic and preferably of plastic fibers.

The patch 124 may have any shape and is preferably in the form of a fabric (woven or unwoven) and more preferably of a woven fabric because such woven fabric has better mechanical properties than unwoven fabric.

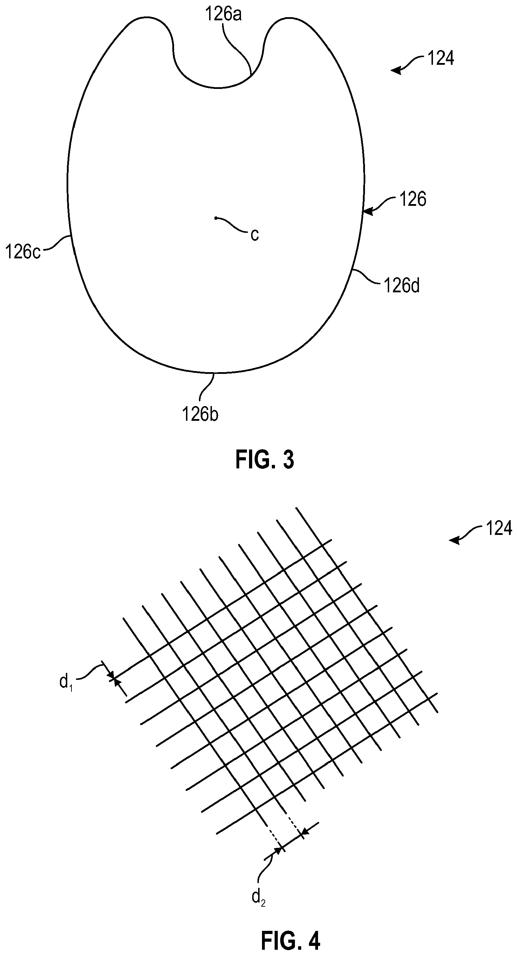

Figure 3 shows an example of shape for the patch and Figure 4 shows a schematic example of a woven fabric of plastic or carbon fibers.

The patch 124 may have a peripheral edge 126 having curved portions 126a, 126b, 126c, 126d, etc. For instance, in the example shown, the patch 124 includes a curved portions 126a extending about 180° and intended to extend about the neck 118. The patch 124 may have a curved portion 126b diametrically opposed to the portion 124a with respect to a center C of the patch 120. Between both portions 126a, 126b, the patch 124 may have lateral curved portions 126c, 126d. The concavity of the portions 126b, 126c, 126d are oriented towards the center C while the concavity of the portion 126a is oriented away from the center.

The plastic fibers are made of at least one polymer selected from the group consisting of polyester, polyamide, polypropylene, polyethylene terephthalate, aramid,

Examples of plastic material that might be used as patch 124 or to form such patch are:
- Saatifil®, for instance reference PA 500/47 (polyamide) or PES 500/48 (polyester),
- Polypropylene TVK Tipplen H 880.

The fibers have a diameter d1 lower than or equal to 500µm, and preferably lower than or equal to 250µm (Figure 4).

The mesh opening d2 of the fabric is for instance lower than or equal to 1000µm, preferably lower than or equal to 800µm, and more preferably lower than or equal to 500µm (Figure 4).

The table below gives some further preferred features of the fibers and of the patch that can be taken alone from each other or in combination with each other:

| | |
|---|---|
| Thickness of the patch | lower than or equal to 1000µm, preferably lower than or equal to 500µm |
| Weight of the patch | lower than or equal to 500g/m², preferably lower than or equal to 200g/m² |
| Tensile strength of the patch | higher than or equal to 600N/5cm, preferably higher than or equal to 1200 N/5cm |
| Breaking elongation of the patch | higher than or equal to 10%, preferably higher than or equal to 15% |
| Air permeability of the patch | Between 2000 and 12000L/m²s, and preferably between 8000 and 10000 L/m²s |
| Max working temperature of the patch | higher than or equal to 120°C, preferably higher than or equal to 150°C |

The patch 124 may be colored and/or printed. In case where the material of the tank would be transparent or slightly transparent, and for instance of a light white color, it might be possible to use a patch of another color such as red, blue or green so that a technician might easily visually identify whether the tank is reinforced or not. The patch may further be printed to provide information to the technician for instance.

The tank and bladder area may have a thickness which is between 1.5 mm and 4 mm.

The purpose of this invention is to optimize the mechanical resistance / deformation of the tank without changing its shape, internal volume, and weight. Its raw material is not even changed so as to keep the ability of the bladder to be welded as described above.

The tank according to the invention may be manufactured by a method including the following steps:
a) positioning said patch into a mold, said mold comprising a cavity configured to define said neck, said patch being positioned into the mold and at least in part about said cavity, and
b) injecting the plastic material into the mold.

Reinforced tanks according to the invention were manufactured and further tested by submitting them to a treatment including a pressure of 160kPa and at a temperature of 120 °C. The conclusions of the test are that the duration of the treatment before failure (cracking) of the tank strongly depends on the mesh opening when a woven fabric is used.

| Comparative example | Tank without patch | Duration before failure 120 hours |
|---|---|---|
| Example 1 | Tank with PA fibers patch having a mesh opening of 0,8mm | Duration before failure 185 hours |
| Example 2 | Tank with PA fibers patch having a mesh opening of 0,5mm | Duration before failure 360 hours |
| Example 3 | Tank with PET fibers patch having a mesh opening of 0,5mm | Duration before failure 515 hours |

## Claims

1. A tank (110), in particular for a vehicle, comprising a single-piece body (112) made of a molded plastic material, said body comprising a bladder (114) defining an internal fluid cavity (116) and a protruding neck (118) defining a fluid port (120) in fluidic communication with said cavity, **characterized in that** it further includes at least one reinforcing plastic patch (124) integrated into the molded material.

2. The tank (110) of claim 1, wherein said patch (124) is made of a fabric.

3. The tank (110) of claim 2, wherein said patch (124) is made of a woven fabric.

4. The tank (110) of claim 2 or 3, wherein said patch (124) has a mesh opening which is lower than or equal to 1000µm, preferably lower than or equal to 800µm, and more preferably lower than or equal to 500µm.

5. The tank (110) of any one of claims 2 to 4, wherein said patch (124) includes plastic fibers made of at least one polymer selected from the group consisting of polyester, polyamide, polypropylene, polyethylene terephthalate aramid.

6. The tank (110) of any one of claims 2 to 43, wherein said patch (124) includes carbon fibers.

7. The tank (110) of claim 5 or 6, wherein said fibers have a diameter lower than or equal to 500µm, and preferably lower than or equal to 250µm.

8. The tank (110) of any one of preceding claims, wherein said plastic material is selected among polypropylene and polyethylene, and a combination thereof.

9. The tank (110) of any one of preceding claims, wherein said plastic material is devoid of any filler outside said area.

10. The tank (110) of any one of preceding claims, wherein said bladder area has a thickness which is between 1.5 mm and 4 mm.

11. The tank (110) of any one of preceding claims, wherein said body (114) is made of an upper molded shell and a lower molded shell which are welded together and linked to one another by a welding bead (122), one of said upper and lower shells, or both, including said patch.

12. The tank (110) of any one of preceding claims, wherein said patch (124) is colored and/or printed.

13. The tank (110) of any one of preceding claims, wherein said patch (124) extends at least in part about said neck (118).
